(19) Europäisches Patentamt / European Patent Office / Office européen des brevets

(11) **EP 4 615 090 A1**

(12) **EUROPEAN PATENT APPLICATION**
published in accordance with Art. 153(4) EPC

(43) Date of publication:
**10.09.2025 Bulletin 2025/37**

(21) Application number: **23884809.7**

(22) Date of filing: **30.10.2023**

(51) International Patent Classification (IPC):
**H04W 72/04** (2023.01)

(52) Cooperative Patent Classification (CPC):
**H04W 72/04; H04W 72/0457; H04W 72/1263**

(86) International application number:
**PCT/CN2023/127589**

(87) International publication number:
**WO 2024/093878 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 CN 202211379466**

(71) Applicant: **Huawei Technologies Co., Ltd.**
**Shenzhen, Guangdong 518129 (CN)**

(72) Inventors:
- **HOU, Hailong**
  **Shenzhen, Guangdong 518129 (CN)**
- **JIN, Zhe**
  **Shenzhen, Guangdong 518129 (CN)**
- **YU, Zheng**
  **Shenzhen, Guangdong 518129 (CN)**
- **WEN, Ronghui**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) This application provides a communication method and apparatus, to implement dynamic scheduling of data transmission of a terminal device within a BWP range. The method includes: determining X sub-BWPs in a BWP of the terminal device, and performing transmission of a first data channel with a network device on Y sub-BWPs in the X sub-BWPs, where a bandwidth of the sub-BWP is less than or equal to a maximum bandwidth supported by the terminal device for baseband processing, the BWP is used for transmission of at least one of the following: a control channel, a data channel, or a reference signal, and the X sub-BWPs are used for transmission of a data channel. The BWP is divided into some resources (namely, the X sub-BWPs) for transmission of data, and some resources (namely, the Y sub-BWPs) in the resources are activated during transmission. Because a frequency domain resource for transmission of data is known by the terminal device, the terminal device may buffer data on an active sub-BWP, so that a buffer size of the terminal device can be reduced, a data packet loss rate can be reduced, and transmission performance can be improved.

Terminal device

Network device

S301: Determine X sub-BWPs in a BWP of the terminal device

S302: Determine the X sub-BWPs in the BWP of the terminal device

S303: The terminal device and the network device perform transmission of a first data channel on Y sub-BWPs in the X sub-BWPs

FIG. 3

**EP 4 615 090 A1**

**Description**

This application claims priority to Chinese Patent Application No. 202211379466.8, filed with the China National Intellectual Property Administration on November 4, 2022 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Further reduction of a maximum bandwidth of user equipment (user equipment, UE) is being considered in the new radio (new radio, NR) standard Rel-18 version. In the Rel-18 version, uplink and downlink radio frequency bandwidth capabilities of the UE still remain 20 MHz, only baseband bandwidth capabilities of two channels, that is, a physical downlink shared channel (physical downlink shared channel, PDSCH) and a physical uplink shared channel (physical uplink shared channel, PUSCH), are reduced, and baseband bandwidth capabilities of other uplink and downlink physical channels and signals still remain 20 MHz.

It is defined in a current NR protocol that a bandwidth of a bandwidth part (bandwidth part, BWP) configured by a network device for UE cannot exceed a maximum bandwidth of the UE. For a terminal device in the Rel-18 version, a BWP may be configured as 20 MHz. Because baseband bandwidth capabilities of two channels, that is, a PDSCH and a PUSCH, of the terminal device in the Rel-18 version are only 5 MHz, a capability of the terminal device for buffering frequency domain data is also only 5 MHz. However, in a scenario of dynamically scheduling data transmission, the UE cannot determine a location of a frequency domain resource carrying uplink/downlink data, and therefore cannot determine frequency domain resources on which data is to be buffered. In this way, how to dynamically schedule data transmission of a terminal device within a BWP range is an urgent problem to be resolved.

SUMMARY

This application provides a communication method and apparatus, to implement dynamic scheduling of data transmission of a terminal device within a BWP range.

According to a first aspect, this application provides a communication method. The method may be performed by a terminal device, or may be performed by a chip or a circuit. The terminal device is used as an example. The method includes: determining X sub-BWPs in a BWP of the terminal device, and performing transmission of a first data channel with a network device on Y sub-BWPs in the X sub-BWPs. X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, the X sub-BWPs are used for transmission of a data channel, and Y is an integer greater than 0 and not greater than X.

In this embodiment of this application, the BWP is divided into some resources (namely, the X sub-BWPs) for transmission of data, and some resources (namely, the Y sub-BWPs) in the resources are activated for transmission of the data during transmission. Because a frequency domain resource for transmission of the data is preconfigured, that is, known by the terminal device, the terminal device may buffer data transmitted on an active sub-BWP. This helps reduce a specification of a buffer (post-FFT buffer) of the terminal device, and reduce costs of the terminal device. In addition, this resolves a problem that the terminal device does not know a specific frequency domain resource in the BWP for which transmitted data is to be buffered because the terminal device does not know a frequency domain resource of the data channel before completing DCI parsing, so that a data packet loss rate is reduced, and transmission performance is improved.

In a possible design, the bandwidth of the sub-BWP is less than or equal to a maximum bandwidth supported by the terminal device for baseband processing for the data channel. According to the foregoing design, the specification of the buffer (post-FFT buffer) of the terminal device can be reduced, and the costs of the terminal device can be reduced.

In a possible design, a total bandwidth of the Y sub-BWPs is less than or equal to the maximum bandwidth supported by the terminal device for baseband processing. According to the foregoing design, the data packet loss rate can be reduced, and the transmission performance can be improved.

In a possible design, the total bandwidth of the Y sub-BWPs is less than or equal to the maximum bandwidth supported by the terminal device for baseband processing for the data channel. In the foregoing design, because the frequency domain resource (namely, the Y sub-BWPs) for transmission of the data is preconfigured, that is, known by the terminal device, and the total bandwidth of the Y sub-BWPs is less than or equal to the maximum bandwidth supported by the terminal device for baseband processing for the data channel, the terminal device may buffer only the data transmitted on an active sub-BWP, so that the data packet loss rate is reduced and the transmission performance is improved.

In a possible design, the method further includes: receiving first information from the network device, where the first information is used for configuring the X sub-BWPs in the BWP.

In a possible design, the first information is used for configuring a value of X; the first information is used for configuring the bandwidth of the sub-BWP; the first information is used for configuring a start location and a bandwidth of each of the X sub-BWPs; the first information is used for configuring an end location and a bandwidth of each of the X sub-BWPs; or the first information is used for configuring a start location and an end location of each of the X sub-BWPs.

In a possible design, the method further includes: receiving second information from the network device, where the second information is used for activating the Y sub-BWPs.

In the foregoing manner, some of the X sub-BWPs are activated, so that the frequency domain resource for transmission of the data channel is known by the terminal device, and the terminal device can receive the data channel by buffering data on the frequency domain resource, so that the transmission performance is improved.

In a possible design, receiving second information from the network device includes: receiving first signaling from the network device, where the first signaling includes one or more of the following signaling: a system information block, radio resource control, and a multimedia access control control element, and the first signaling carries the second information.

In the foregoing manner, the Y active sub-BWPs are preconfigured by using the signaling such as the system information block, so that the terminal device can determine the frequency domain resource of the data channel. In this way, the data packet loss rate is reduced, and the transmission performance is improved.

In a possible design, receiving second information from the network device includes: receiving downlink control information from the network device, where the downlink control information is used for scheduling a data channel, and the downlink control information carries the second information.

In a possible design, at least one time domain unit is separated between a time domain resource carrying the downlink control information and a time domain resource of the data channel scheduled by using the downlink control information.

In the foregoing manner, cross-slot scheduling is performed for the control channel and a data channel scheduled by using the control channel, so that the terminal device can determine the active sub-BWP before receiving the data channel. In this way, the data packet loss rate is reduced, and the transmission performance is improved.

In a possible design, a time domain unit corresponding to the Y sub-BWPs starting to take effect is a start time unit of the time domain resource of the data channel scheduled by using the downlink control information.

In a possible design, a time domain unit corresponding to the Y sub-BWPs starting to take effect is a time domain unit that is after the time domain resource carrying the downlink control information and that is separated by M time domain units from the time domain resource carrying the downlink control information.

In a possible design, the second information is carried in at least one reserved bit in the downlink control information. In this manner, the reserved bit in the DCI is reused, so that signaling overheads can be reduced.

In a possible design, the second information is carried in at least one bit in a downlink assignment indicator field in the downlink control information. In this manner, the DAI indicator field in the DCI is reused, so that the signaling overheads can be reduced.

In a possible design, the second information is carried in a first indicator field in the downlink control information, and the first indicator field indicates the active sub-BWP in the BWP. In this manner, the BWP indicator indicator field in the DCI is reused, so that the signaling overheads can be reduced.

In a possible design, the second information is carried in a second indicator field in the downlink control information, and the second indicator field indicates the active BWP.

In a possible design, the second information is carried in at least one bit in a frequency domain resource allocation indicator field in the downlink control information.

In a possible design, the downlink control information includes the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

In a possible design, the method further includes: communicating with the network device on a time domain resource between the time domain resource carrying the downlink control information and the time domain resource of the data channel scheduled by using the downlink control information. In this manner, a communication interruption probability can be reduced, and communication performance can be improved.

According to a second aspect, this application provides a communication method. The method may be performed by a network device, or may be performed by a chip or a circuit. The network device is used as an example. The method includes: determining X sub-BWPs in a bandwidth part BWP of a terminal device, and performing transmission of a first data channel with the terminal device on Y sub-BWPs in the X sub-BWPs. X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, the X sub-BWPs are used for transmission of a data channel, and Y is an integer greater than 0 and not greater than X.

In this embodiment of this application, the BWP is divided into some resources (namely, the X sub-BWPs) for transmission of data, and some resources (namely, the Y sub-BWPs) in the resources are activated for transmission of the data during transmission. Because a frequency domain resource for transmission of the data is preconfigured, that is, known by the terminal device, the terminal device may buffer data transmitted on an active sub-BWP. This helps reduce a specification of a buffer (post-FFT buffer) of the terminal device, and reduce costs of the terminal device. In addition, this resolves a problem that the terminal device does not know a specific frequency domain resource in the BWP for which transmitted data is to be buffered because the terminal device does not know a frequency domain resource of the data channel before completing DCI parsing, so that a data packet loss rate is reduced, and transmission performance is improved.

In a possible design, the bandwidth of the sub-BWP is less than or equal to a maximum bandwidth supported by the terminal device for baseband processing for the data channel. According to the foregoing design, the specification of the buffer (post-FFT buffer) of the terminal device can be reduced, and the costs of the terminal device can be reduced.

In a possible design, a total bandwidth of the Y sub-BWPs is less than or equal to the maximum bandwidth supported by the terminal device for baseband processing. According to the foregoing design, the data packet loss rate can be reduced, and the transmission performance can be improved.

In a possible design, the total bandwidth of the Y sub-BWPs is less than or equal to the maximum bandwidth supported by the terminal device for baseband processing for the data channel. In the foregoing design, because the frequency domain resource (namely, the Y sub-BWPs) for transmission of the data is preconfigured, that is, known by the terminal device, and the total bandwidth of the Y sub-BWPs is less than or equal to the maximum bandwidth supported by the terminal device for baseband processing for the data channel, the terminal device may buffer only the data transmitted on an active sub-BWP, so that the data packet loss rate is reduced and the transmission performance is improved.

In a possible design, the method further includes: sending first information to the terminal device, where the first information is used for configuring the X sub-BWPs in the BWP.

In a possible design, the method further includes: The first information is used for configuring a value of X; the first information is used for configuring the bandwidth of the sub-BWP; the first information is used for configuring a start location and a bandwidth of each of the X sub-BWPs; the first information is used for configuring an end location and a bandwidth of each of the X sub-BWPs; or the first information is used for configuring a start location and an end location of each of the X sub-BWPs.

In a possible design, the method further includes: sending second information to the terminal device, where the second information is used for activating the Y sub-BWPs.

In the foregoing manner, some of the X sub-BWPs are activated, so that the frequency domain resource for transmission of the data channel is known by the terminal device, and the terminal device can receive the data channel by buffering data on the frequency domain resource, so that the transmission performance is improved.

In a possible design, sending second information to the terminal device includes: sending first signaling to the terminal device, where the first signaling includes one or more of the following signaling: a system information block, radio resource control, and a multimedia access control control element, and the first signaling carries the second information.

In the foregoing manner, the Y active sub-BWPs are preconfigured by using the signaling such as the system information block, so that the terminal device can determine the frequency domain resource of the data channel. In this way, the data packet loss rate is reduced, and the transmission performance is improved.

In a possible design, sending second information to the terminal device includes: sending downlink control information to the terminal device, where the downlink control information is used for scheduling a data channel, and the downlink control information carries the second information.

In a possible design, at least one time domain unit is separated between a time domain resource carrying the downlink control information and a time domain resource of the data channel scheduled by using the downlink control information.

In the foregoing manner, cross-slot scheduling is performed for the control channel and a data channel scheduled by using the control channel, so that the terminal device can determine the active sub-BWP before receiving the data channel. In this way, the data packet loss rate is reduced, and the transmission performance is improved.

In a possible design, a time domain unit corresponding to the Y sub-BWPs starting to take effect is a start time unit of the time domain resource of the data channel scheduled by using the downlink control information.

In a possible design, a time domain unit corresponding to the Y sub-BWPs starting to take effect is a time domain unit that is after the time domain resource carrying the downlink control information and that is separated by M time domain units from the time domain resource carrying the downlink control information.

In a possible design, the second information is carried in at least one reserved bit in the downlink control information. In this manner, the reserved bit in the DCI is reused, so that signaling overheads can be reduced.

In a possible design, the second information is carried in at least one bit in a downlink assignment indicator field in the downlink control information. In this manner, the DAI indicator field in the DCI is reused, so that the signaling overheads can be reduced.

In a possible design, the second information is carried in a first indicator field in the downlink control information, and the first indicator field indicates the active sub-BWP in the BWP. In this manner, the BWP indicator indicator field in the DCI is reused, so that the signaling overheads can be reduced.

In a possible design, the second information is carried in a second indicator field in the downlink control information, and the second indicator field indicates the active BWP.

In a possible design, the second information is carried in at least one bit in a frequency domain resource allocation indicator field in the downlink control information.

In a possible design, the downlink control information includes the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

In a possible design, the method further includes: communicating with the terminal device on a time domain resource between the time domain resource carrying the downlink control information and the time domain resource of the data channel scheduled by using the downlink control information. In this manner, a communication interruption probability can be reduced, and communication performance can be improved.

According to a third aspect, this application further provides a communication apparatus. The communication apparatus implements any method according to the first aspect. The communication apparatus may be implemented by hardware, or may be implemented by executing corresponding software by hardware. The hardware or software includes one or more units or modules corresponding to the foregoing functions.

In a possible design, the communication apparatus includes a processor, and the processor is configured to support the communication apparatus in performing a corresponding function of the terminal device in the foregoing methods. The communication apparatus may further include a memory. The memory may be coupled to the processor, and the memory stores program instructions and data that are necessary for the communication apparatus. Optionally, the communication apparatus further includes an interface circuit, and the interface circuit is configured to support communication between the communication apparatus and a network device.

For example, the communication apparatus has a function of implementing the method according to the first aspect, and the processor may be configured to determine X sub-BWPs in a BWP of the terminal device. The interface circuit is configured to perform transmission of a first data channel with the network device on Y sub-BWPs in the X sub-BWPs.

In a possible design, the communication apparatus includes corresponding function modules respectively configured to implement the steps in the foregoing methods. The function may be implemented by hardware, or may be implemented by executing corresponding software by hardware. The hardware or the software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method according to the first aspect. Details are not described herein again.

For example, the communication apparatus has a function of implementing the method according to the first aspect. The processing unit is configured to determine X sub-BWPs in a BWP of the terminal device. The communication unit is configured to perform transmission of a first data channel with the network device on Y sub-BWPs in the X sub-BWPs.

According to a fourth aspect, this application further provides a communication apparatus. The communication apparatus has functions of implementing any method according to the second aspect. The communication apparatus may be implemented by hardware, or may be implemented by executing corresponding software by hardware. The hardware or software includes one or more units or modules corresponding to the foregoing functions.

In a possible design, the communication apparatus includes a processor, and the processor is configured to support the communication apparatus in performing a corresponding function of the reader/writer in the foregoing methods. The communication apparatus may further include a memory. The memory may be coupled to the processor, and the memory stores program instructions and data that are necessary for the communication apparatus. Optionally, the communication apparatus further includes an interface circuit, and the interface circuit is configured to support communication between the communication apparatus and a device such as a terminal device.

For example, the communication apparatus has a function of implementing the method according to the second aspect, and the processor may be configured to determine X sub-BWPs in a BWP of the terminal device. The interface circuit is configured to perform transmission of a first data channel with the terminal device on Y sub-BWPs in the X sub-BWPs.

In a possible design, the communication apparatus includes corresponding function modules respectively configured to implement the steps in the foregoing methods. The function may be implemented by hardware, or may be implemented by executing corresponding software by hardware. The hardware or the software includes one or more modules corresponding to the foregoing functions.

In a possible design, a structure of the communication apparatus includes a processing unit (or a processing module) and a communication unit (or a first communication module). These units may perform corresponding functions in the foregoing method examples. For details, refer to the descriptions in the method according to the second aspect. Details are not described herein again.

For example, the communication apparatus has a function of implementing the method according to the second aspect, and the processing unit may be configured to determine X sub-BWPs in a BWP of the terminal device. The communication unit is configured to perform transmission of a first data channel with the terminal device on Y sub-BWPs in the X sub-BWPs.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect and the possible designs by using a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs by using a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, and may further include a memory, configured to implement the method in any one of the first aspect or the second aspect and the possible designs. The chip system may include a chip, or may include a chip and another discrete component.

According to a tenth aspect, a communication system is provided. The system includes the apparatus (for example, the terminal device) according to the first aspect and the apparatus (for example, the network device) according to the second aspect.

According to an eleventh aspect, a communication method is provided. The method includes: A terminal device determines X sub-BWPs in a BWP of the terminal device, a network device determines the X sub-BWPs in the bandwidth part BWP of the terminal device, and the terminal device and the network device perform transmission of a first data channel on Y sub-BWPs in the X sub-BWPs. X is an integer greater than or equal to 1, a bandwidth of the sub-B WP is less than or equal to a maximum bandwidth supported by the terminal device for baseband processing, the BWP is used for transmission of at least one of the following: a control channel, a data channel, or a reference signal, the X sub-BWPs are used for transmission of a data channel, and Y is an integer greater than 0 and not greater than X.

## BRIEF DESCRIPTION OF DRAWINGS

FIG. 1 is a diagram of an architecture of a network system according to an embodiment of this application;

FIG. 2 is a diagram of a connection between a terminal device and a network device according to an embodiment of this application;

FIG. 3 is a schematic flowchart of a communication method according to an embodiment of this application;

FIG. 4 is a diagram of X sub-BWPs according to an embodiment of this application;

FIG. 5 is a diagram of indicating second information by an RDRA indicator field according to an embodiment of this application;

FIG. 6 is a diagram of an active sub-BWP according to an embodiment of this application;

FIG. 7 is a diagram of an active sub-BWP according to an embodiment of this application;

FIG. 8 is a diagram of an active sub-BWP according to an embodiment of this application;

FIG. 9 is a diagram of a structure of a communication apparatus according to an embodiment of this application; and

FIG. 10 is a diagram of a structure of a communication apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

1. A terminal device may be a device having a wireless transceiver function or a chip that can be disposed in any device, or may be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer with the wireless transceiver function, an XR device (such as a VR device, an AR device, or an MR device), a wireless terminal in industrial control (industrial control), a wireless terminal in self-driving (self-driving), a wireless terminal in video surveillance, a wearable terminal device, or the like. Alternatively, the terminal device may be eMBB UE, URLLC UE, an uncrewed aerial vehicle, another internet of things (internet of things, IoT) device, a positioning device, or the like.

A network device may be an apparatus configured to implement a function of an access network device. The access network device may be a device that communicates with a wireless terminal device over an air interface in an access network by using one or more cells. For example, the access network device may be a next generation NodeB (next Generation NodeB, gNB) in an NR system, an evolved NodeB (evolved NodeB, eNB) in a long term evolution (long term evolution, LTE) system, or the like. Alternatively, the network device may be an apparatus that can support the network device in implementing the function of the access network device, for example, a chip system. The apparatus may be installed in the network device.

2. A reduced capability (reduced capability, REDCAP) terminal device (REDCAP UE) may have at least one of the following features:

(1) A maximum bandwidth in a frequency range (frequency range, FR) 1 during initial access and/or after initial access does not exceed 20 MHz. A maximum bandwidth in an FR 2 during initial access and/or after initial access does not exceed 100 MHz.
(2) A minimum quantity of supported receive antenna (Rx) branches is 1.
(3) A protocol version is NR Rel-17 or later.

(4) Only half-duplex frequency division duplex (frequency division duplex, FDD) is supported.
(5) If there is one Rx branch, one downlink (downlink, DL) maximum multiple-in multiple-out (multiple-in multiple-out, MIMO) layer is supported. If there are two Rx branches, two DL MIMO layers are supported.

The reduced capability terminal device may be understood as a terminal device with a reduced capability compared with a legacy terminal device (legacy UE). The capability includes but is not limited to features in the foregoing five aspects. The legacy terminal device may be, for example, an enhanced mobile broadband (enhanced Mobile Broadband, eMBB) terminal device or an ultra-reliable low-latency communication (ultra-reliable low-latency communication, URLLC) terminal device.

3. Baseband bandwidth (baseband bandwidth, BB Bandwidth)

In an NR system, a signal processing part of a terminal device includes a radio frequency processing unit and a baseband processing unit. The baseband processing unit may include function modules such as digital-to-analog conversion (ADC)/analog-to-digital conversion (DAC), fast Fourier transform (FFT)/inverse fast Fourier transform (IFFT), post-FFT data buffering (post-FFT data buffering), a receiving processing block (receiving processing block), LDPC decoding (LDPC decoding), hybrid automatic repeat request buffer (HARQ buffer), a downlink control processing and decoder (DL control processing and decoder), an uplink processing block (UL processing), a MIMO specific processing block (MIMO specific processing block), and a synchronization/cell search block (Synchronization/cell search block). Software and hardware implementations of different terminal devices may be different, and support and implementation of the foregoing baseband function modules may also be different. This is not limited in this application. A baseband bandwidth capability of a terminal device may be understood as bandwidth capabilities of all or some function blocks in the foregoing radio frequency function blocks and baseband modules.

Currently, the terminal device may have different baseband processing capabilities for different channels. For example, for a data channel (for example, a PDSCH and a PUSCH), a baseband processing bandwidth of a RedCap terminal device is 5 MHz, and for another physical channel or signal, a baseband processing capability of the RedCap terminal device is 20 MHz. Further, for the data channel, a bandwidth of the post-FFT data buffering in the baseband processing module of the terminal device may be different from a bandwidth of another baseband module. For example, the bandwidth of the post-FFT data buffering is 20 MHz, and the bandwidth of the another baseband module is 5 MHz.

4. Radio frequency bandwidth (radio frequency bandwidth, RF bandwidth)

The radio frequency processing unit may include function modules such as an antenna array, a power amplifier, a filter, a transmitter, a duplexer, or a converter, and is configured to receive and send information. Software and hardware implementations of different terminal devices may be different, and support and implementation of the foregoing radio frequency function modules may also be different. This is not limited in this application.

5. Post-fast Fourier transform data buffering (post-FFT data buffering)

For a downlink signal, a receiving processing procedure of a terminal device is as follows: receiving the downlink signal through a radio frequency part, converting, through ADC, a received analog signal into a digital signal after sampling, converting the digital signal from a time domain to a frequency domain through FFT processing, storing an obtained frequency domain signal in a buffer module, and then, other processing is performed, where for example, code block processing including channel estimation, channel equalization, and demodulation is performed by using a receiving processing block, and operations such as channel decoding are performed by using a decoding module. The buffer module may be, for example, a post-FFT buffer, and is configured to buffer a result that is obtained through fast Fourier transform performed on data and that is for subsequent further processing.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

In addition, unless otherwise stated, ordinal numbers such as "first" and "second" in embodiments of this application are intended to distinguish between a plurality of objects, and are not intended to limit sizes, content, an order, a time sequence, priorities, or importance degrees of the plurality of objects. For example, a first indicator field and a second indicator field are merely intended to distinguish between different indicator fields, but do not indicate different sizes, content, priorities, or importance levels of the two indicator fields.

The foregoing describes some terms in embodiments of this application. The following describes technical features in embodiments of this application.

A bandwidth capability of an eMBB terminal device, for example, a terminal device in Rel-15/Rel-16, is 100 MHz. REDCAP UE is introduced in Rel-17, a bandwidth capability of the REDCAP UE is lower than the bandwidth capability of the terminal in Rel-15/Rel-16, and a maximum bandwidth supported by the REDCAP UE in an FR 1 frequency range is reduced to 20 MHz. Therefore, costs of the terminal are greatly reduced. Currently, further reduction of the maximum bandwidth of the terminal device is being considered in the NR standard Rel-18 version. In the Rel-18 version, uplink and downlink radio frequency bandwidth capabilities of the terminal device still remain 20 MHz, only baseband bandwidth capabilities of two channels, that is, a physical downlink shared channel (physical downlink shared channel, PDSCH) and a physical uplink shared channel (physical uplink shared channel, PUSCH), are reduced, and baseband bandwidth capabilities of other uplink and downlink physical channels and signals still remain 20 MHz.

It is defined in a current NR protocol that a bandwidth of a bandwidth part (bandwidth part, BWP) configured by a network device for the UE cannot exceed the maximum bandwidth of the UE. For the terminal device in the Rel-18 version, a maximum bandwidth of a BWP may be configured as 20 MHz. Because baseband bandwidth capabilities of two channels, that is, a PDSCH and a PUSCH, of the terminal device in the Rel-18 version are only 5 MHz, a capability of the terminal device for buffering frequency domain data is also only 5 MHz. For example, a bandwidth capability of a buffer through FFT processing (post-FFT buffer) is 5 MHz.

For the terminal device in the Rel-18 version, the maximum bandwidth of the BWP may be configured as 20 MHz, and a resource for uplink/downlink data of the terminal device is also allocated based on the entire BWP. In a scenario of dynamically scheduling data transmission, if downlink control information (downlink control information, DCI) is used for scheduling PDSCH/PUSCH transmission in a current slot, and after receiving a physical downlink control channel (physical downlink control channel, PDCCH) carrying the DCI, the terminal device needs specific time to demodulate and decode the PDCCH and parse the DCI, the terminal device does not know a location of a frequency domain resource of the scheduled PDSCH/PUSCH before obtaining parsing information of the DCI, and therefore does not know frequency resources on which data should be stored in the post-FFT buffer. In this way, how to dynamically schedule data transmission of a terminal device within a BWP range is an urgent problem to be resolved.

Based on this, this application provides a communication method and apparatus, to implement dynamic scheduling of the data transmission of the terminal device within the BWP range. The method and an apparatus are based on a same inventive concept. Because the method and the apparatus have a similar problem-resolving principle, for implementations of the apparatus and the method, refer to each other, and no repeated description is provided.

The communication method provided in this application may be applied to various communication systems, for example, the internet of things (internet of things, IoT), the narrowband internet of things (narrowband internet of things, NB-IoT), long term evolution (long term evolution, LTE), a 5th generation (5G) communication system, an LTE and 5G hybrid architecture, a 5G new radio (new radio, NR) system, and a 6G system or a new communication system emerging in future communication development. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network.

The network device and the terminal device may communicate with each other over a licensed spectrum (licensed spectrum), may communicate with each other over an unlicensed spectrum (unlicensed spectrum), or may communicate with each other over both the licensed spectrum and the unlicensed spectrum. The network device and the terminal device may communicate with each other by using a spectrum below 6G, may communicate with each other by using a spectrum above 6G, or may communicate with each other by using both the spectrum below 6G and the spectrum above 6G. A spectrum resource used between the network device and the terminal device is not limited in embodiments of this application.

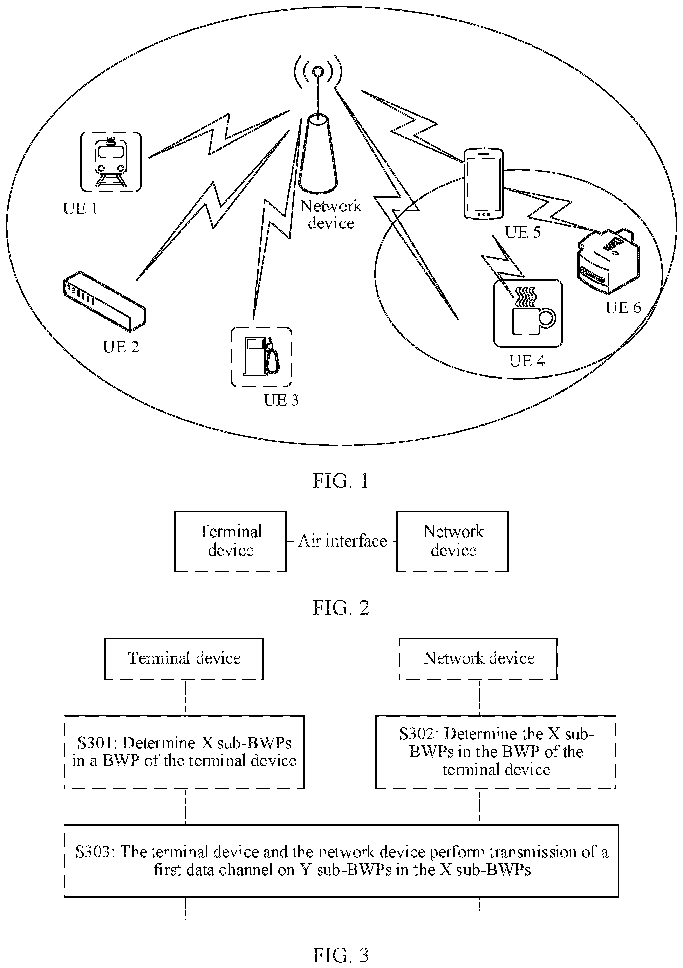

FIG. 1 shows a communication system according to an embodiment of this application. The communication system includes one network device and six terminal devices, namely, UE 1 to UE 6. In the communication system, the UE 1 to the UE 6 may send uplink data to the network device, and the network device may receive the uplink data sent by the UE 1 to the UE 6. In addition, UE 4 to the UE 6 may also form a communication subsystem. The network device may send downlink information to the UE 1, UE 2, UE 3, and UE 5, and the UE 5 may send the downlink information to the UE 4 and the UE 6 based on a device-to-device (device-to-device, D2D) technology. FIG. 1 is merely a diagram, and a type of a communication system, a quantity of devices included in the communication system, a type of a device included in the communication system, and the like are not specifically limited.

For example, the network device and the terminal device may be connected through an air interface. For example, a connection relationship between the network device and the terminal device may be shown in FIG. 2.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

The following describes the technical solutions in embodiments of this application with reference to the accompanying drawings in embodiments of this application. For ease of description, in the following descriptions, an example in which the method is performed by a network device and a terminal device is used. The terminal device may be REDCAP UE, for example, may be a terminal device in the Rel-17 version, a terminal device in a Rel-18 version, or a terminal device in a version later than the Rel-18 version.

In embodiments of this application, "transmission" may be understood as sending and/or receiving. For ease of understanding the solutions, the following uses an example in which transmission on a terminal device side refers to sending uplink data (or a PUSCH) and/or receiving downlink data (or a PDSCH), and transmission on a network device side refers to receiving uplink data (or a PUSCH) and/or sending downlink data (or a PDSCH) to describe the communication method described in this application.

A BWP in this application may be a downlink BWP, for example, an initial downlink BWP or a UE-specific downlink BWP, or may be an uplink BWP, for example, an initial uplink BWP or a UE-specific uplink BWP. This is not limited in this application.

FIG. 3 is a schematic flowchart of a communication method in this application. The method includes the following steps.

S301: A terminal device determines X sub-BWPs in a BWP of the terminal device.

X is an integer greater than or equal to 1.

A bandwidth of the sub-BWP is less than or equal to a maximum bandwidth supported by the terminal device for baseband processing. The "maximum bandwidth for baseband processing" may also be described as a "maximum baseband bandwidth", a "baseband processing capability", a "maximum baseband bandwidth", or the like.

Specifically, the bandwidth of the sub-BWP is less than or equal to a maximum bandwidth supported by the terminal device for baseband processing for a data channel. In other words, the bandwidth of the sub-BWP is less than or equal to baseband bandwidth capabilities of two channels, that is, a PDSCH and a PUSCH, of the terminal device.

For example, the baseband bandwidth capabilities of the two channels, namely, the PDSCH and the PUSCH, of the terminal device are 5 MHz. The bandwidth of the sub-BWP may be less than or equal to 5 MHz. Alternatively, it may be described as that a quantity of RBs included in the sub-BWP may be less than or equal to a quantity of RBs corresponding to 5 MHz.

For example, if a subcarrier spacing is 15 kHz, a quantity of RBs corresponding to 5 MHz may be 25, 26, 27, or 28. If the subcarrier spacing is 30 kHz, a quantity of RBs corresponding to 5 MHz may be 11, 12, 13, or 14.

The sub-BWP may also be referred to as a resource block (resource block, RB) set, a narrowband, a frequency domain resource set, a frequency domain resource, a frequency band, a frequency range, a frequency sub-range, or the like.

The BWP is used for transmission of at least one of the following: a control channel, a data channel, or a reference signal. The X sub-BWPs are used for transmission of a data channel. The control channel may include a PDCCH, a physical uplink control channel (physical uplink control channel, PUCCH), and the like. The data channel includes a PDSCH, a PUSCH, and the like. The reference signal may include but is not limited to a synchronization signal/physical broadcast channel block (synchronization signal/physical broadcast channel block, SSB), a channel state information-reference signal (channel state information-reference signal, CSI-RS), a sounding reference signal (sounding reference signal, SRS), and the like.

In the foregoing manner, control channel measurement, reference signal measurement, and reference signal-based measurement (for example, channel state information (channel state information, CSI) measurement, radio resource management (radio resource management, RRM) measurement, and radio link monitor (radio link monitor, RLM)/radio link failure (radio link failure, RLF)/bidirectional forwarding detection (bidirectional forwarding detection, BFD) measurement) are all performed based on the BWP, and transmission of data such as the PDSCH and the PUSCH is performed based on the X sub-BWPs.

The X sub-BWPs may be consecutive or inconsecutive in frequency domain. This is not specifically limited in this application.

In this application, a total bandwidth of the X sub-BWPs may be less than a bandwidth of the BWP, or may be equal to a bandwidth of the BWP. This is not specifically limited herein.

If the X sub-BWPs are consecutive in frequency domain, the total bandwidth of the X sub-BWPs may be a sum of bandwidths of the X sub-BWPs, or may be a bandwidth between a start location of a $1^{st}$ sub-BWP and an end location of a last sub-BWP.

If the X sub-BWPs are inconsecutive in frequency domain, the total bandwidth of the X sub-BWPs may be a bandwidth between a start location of a $1^{st}$ sub-BWP and an end location of a last sub-BWP.

The $1^{st}$ sub-BWP may be a sub-BWP with a smallest index of a start location in the X sub-BWPs, and the last sub-BWP may be a sub-BWP with a largest index of a start location in the X sub-BWPs.

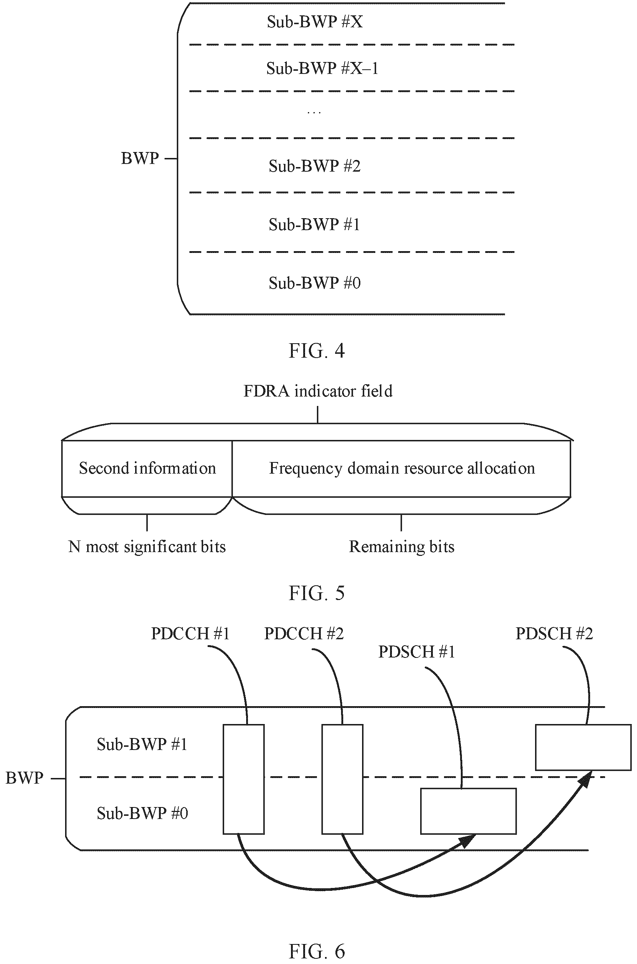

For example, the X sub-BWPs are consecutive in frequency domain, and the total bandwidth of the X sub-BWPs is equal to the bandwidth of the BWP. A relationship between the BWP and the X sub-BWPs may be shown in FIG. 4.

A specific manner in which the terminal device determines the X sub-BWPs is described in detail below.

S302: A network device determines the X sub-BWPs in the BWP of the terminal device.

It should be noted that an execution sequence of S301 and S302 is not limited in this application.

For a manner in which the network device determines the X sub-BWPs, refer to the manner in which the terminal device determines the X sub-BWPs. Details are not described herein again.

S303: The terminal device and the network device perform transmission of a first data channel on Y sub-BWPs in the X sub-BWPs.

Y is an integer greater than 0 and not greater than X.

Optionally, a total bandwidth of the Y sub-BWPs is less than or equal to the maximum bandwidth supported by the terminal device for baseband processing. Specifically, the total bandwidth of the Y sub-BWPs is less than or equal to the maximum bandwidth supported by the terminal device for baseband processing for the data channel. In other words, the total bandwidth of the Y sub-BWPs is less than or equal to the baseband bandwidth capabilities of the two channels, namely, the PDSCH and the PUSCH, of the terminal device. For example, the baseband bandwidth capabilities of the two channels, namely, the PDSCH and the PUSCH, of the terminal device are 5 MHz. The total bandwidth of the Y sub-BWPs may be less than or equal to 5 MHz.

Specifically, the first data channel is a PUSCH. The terminal device sends the PUSCH on the Y sub-BWPs in the X sub-BWPs. Correspondingly, the network device receives the PUSCH on the Y sub-BWPs in the X sub-BWPs.

Alternatively, the first data channel is a PDSCH. The network device sends the PDSCH on the Y sub-BWPs in the X sub-BWPs. Correspondingly, the terminal device receives the PDSCH on the Y sub-BWPs in the X sub-BWPs.

In a specific implementation, at a same moment, only the Y sub-BWPs in the X sub-BWPs are in an active state. That is, only the Y sub-BWPs can be used for transmission of the data. At different moments, sub-BWPs in an active state in the X sub-BWPs may be the same or different. "Different" may mean that the sub-BWPs are completely different, or at least one sub-BWP is different. The terminal device performs transmission of the data only on the active sub-BWP, for example, receives and processes a PDSCH on the active sub-BWP, and sends the PUSCH on the active sub-BWP.

Manners in which the terminal device and the network device determine the Y sub-BWPs are similar. A specific manner is described in detail below.

In this embodiment of this application, the BWP is divided into some resources (namely, the X sub-BWPs) for transmission of the data, and some resources (namely, the Y sub-BWPs) in the resources are activated for transmission of the data during transmission. Because a frequency domain resource for transmission of the data is preconfigured, that is, known by the terminal device, in a scenario in which DCI is used for scheduling the data transmission in a current slot, the terminal device may buffer only data transmitted on an active sub-BWP. This helps reduce a specification of a buffer (post-FFT buffer) of the terminal device, and reduce costs of the terminal device. In addition, this resolves a problem that the terminal device does not know a specific frequency domain resource in the BWP for which transmitted data is to be buffered because the terminal device does not know a frequency domain resource of the data channel before completing DCI parsing, so that a data packet loss rate is reduced, and transmission performance is improved.

The following uses the terminal device as an example to describe the manner of determining the X sub-BWPs.

In a possible implementation, the X sub-BWPs may be predefined.

In another possible implementation, the terminal device may determine the X sub-BWPs in the BWP based on first information from the network device. The first information is used for configuring the X sub-BWPs in the BWP.

The following describes five examples of the first information.

Example 1: The first information may be used for configuring a value of X. Therefore, the terminal device may divide the BWP into the X sub-BWPs, where each sub-BWP includes $\left\lceil \frac{N_{BWP}^{Size}}{X} \right\rceil$ or $\left\lfloor \frac{N_{BWP}^{Size}}{X} \right\rfloor$ RBs, $\lceil \rceil$ represents rounding up, $\lfloor \rfloor$ represents rounding down, and $N_{BWP}^{Size}$ is a total quantity of RBs included in the BWP.

Further, when dividing the BWP into the X sub-BWPs, the terminal device may determine the X sub-BWPs in ascending order of the frequency domain resources (or in ascending order of RB indexes) or in descending order of the frequency domain resources (or in descending order of the RB indexes).

Example 2: The first information is used for configuring the bandwidth of the sub-BWP, and may be specifically used for configuring the quantity of RBs included in the sub-BWP. Therefore, the terminal device may divide the BWP into the X sub-BWPs based on the bandwidth of the sub-BWP.

Further, when dividing the BWP into the X sub-BWPs, the terminal device may sequentially determine the X sub-BWPs in ascending order of the frequency domain resources (or in ascending order of the RB indexes) or in descending order of the frequency domain resources (or in descending order of the RB indexes).

In this manner, X may be less than or equal to $\left\lceil \frac{N_{BWP}^{Size}}{N_{Sub-BWP}^{Size}} \right\rceil$ , where $\lceil \rceil$ represents rounding up, and $N_{Sub-BWP}^{Size}$ is the quantity of RBs included in the sub-BWP; or X may be less than or equal to $\left\lfloor \frac{N_{BWP}^{Size}}{N_{Sub-BWP}^{Size}} \right\rfloor$ , where $\lfloor \rfloor$ represents rounding down.

Example 3: The first information is used for configuring a start location and a bandwidth of each of the X sub-BWPs. Therefore, the terminal device may determine the X sub-BWPs in the BWP based on the start location and the bandwidth of each sub-BWP.

Example 4: The first information is used for configuring an end location and a bandwidth of each of the X sub-BWPs. Therefore, the terminal device may determine the X sub-BWPs in the BWP based on the end location and the bandwidth of each sub-BWP.

Example 5: The first information is used for configuring a start location and an end location of each of the X sub-BWPs. Therefore, the terminal device may determine the X sub-BWPs in the BWP based on the start location and the end location of each sub-BWP.

Optionally, in Example 3 to Example 5, the start location may be represented by an index of an RB, the end location may be represented by an index of an RB, and the bandwidth may be represented by a quantity of RBs.

In an example description, the first information may be carried in signaling such as a master information block (master information block, MIB), a physical broadcast channel (physical broadcast channel, PBCH), a system information block (system information block, SIB), radio resource control (radio resource control, RRC), a multimedia access control control element (media access control control element, MAC CE), or the DCI.

The foregoing describes a manner of configuring the X sub-BWPs. The following uses the terminal device as an example to describe a manner of activating the Y sub-BWPs in the X sub-BWPs.

In a possible implementation, the terminal device may determine the Y sub-BWPs based on second information from the network device, where the second information is used for activating the Y sub-BWPs. Alternatively, this may be described as that the second information indicates the Y active sub-BWPs.

In a specific manner, the network device may send the second information by using first signaling, where the first signaling includes one or more of the following signaling: the SIB, the RRC, and the MAC CE.

In the foregoing manner, the Y active sub-BWPs are preconfigured by using the signaling such as the SIB, the RRC, or the MAC CE, so that the terminal device can determine a range of the frequency domain resource of the data channel, and can buffer only the data transmitted on an active sub-BWP. This helps reduce the specification of the buffer (post-FFT buffer) of the terminal device, and reduce the costs of the terminal device. In addition, the data packet loss rate may be reduced, and the transmission performance may be improved.

In another specific manner, the network device may perform transmission of the second signaling by using the DCI. Optionally, the DCI is used for scheduling the data channel. It should be noted that, when the DCI is used for scheduling the data channel, the DCI may specifically indicate information such as a time domain resource, a frequency domain resource, a modulation and coding scheme (modulation and coding scheme, MCS), a redundancy version (redundancy version, RV), and a quantity of transmission layers of the data channel. The information is not listed one by one herein.

Further, the second information may be carried in at least one reserved bit in the DCI. For example, for DCI scrambled by using a system information radio network temporary identifier (system Information RNTI, SI-RNTI), a paging radio network temporary identifier (paging RNTI, P-RNTI), a temporary cell radio network temporary identifier (random access RNTI, RA-RNTI), or a random access radio network temporary identifier (temporary cell RNTI, TC-RNTI), the second information may be indicated by the at least one reserved bit in the DCI. In this manner, the reserved bit in the DCI is reused, so that signaling overheads can be reduced.

Alternatively, the second information may be carried in at least one bit in a downlink assignment indicator (downlink assignment indicator, DAI) indicator field in the DCI. For example, for the TC-RNTI, in this manner, the DAI indicator field in the DCI is reused, so that the signaling overheads can be reduced.

Alternatively, the second information may be carried in a first indicator field in the DCI, where the first indicator field indicates an active sub-BWP in the BWP.

Alternatively, the second information may be carried in a second indicator field in the DCI, where the second indicator field indicates an active BWP. For example, the second indicator field may be a BWP indicator indicator field in the DCI. In this manner, the BWP indicator indicator field in the DCI is reused, so that the signaling overheads can be reduced.

Alternatively, the second information may be carried in at least one bit in a frequency domain resource allocation (frequency domain resource allocation, FDRA) indicator field in the DCI. For example, the second information may be carried in n most significant bits of the FDRA indicator field, and remaining bits indicate frequency domain resource allocation, and may specifically indicate a location of the frequency domain resource of the data channel, where n is an integer greater than 0, as shown in FIG. 5.

Optionally, the location of the frequency domain resource indicated by the FDRA indicator field may be represented based on the BWP, or the location of the frequency domain resource indicated by the FDRA indicator field may be a relative location in the BWP. In other words, a reference start point of the frequency domain resource indicated by the FDRA indicator field is a start location of the BWP. Alternatively, the location of the frequency domain resource indicated by the FDRA indicator field may be represented based on the active sub-BWP, or the location of the frequency domain resource indicated by the FDRA indicator field may be a relative location in the active sub-BWP. In other words, a reference start point of the frequency domain resource indicated by the FDRA indicator field is a start location of the active sub-BWP. Alternatively, the location of the frequency domain resource indicated by the FDRA indicator field may be represented based on the X sub-BWPs, or the location of the frequency domain resource indicated by the FDRA indicator field may be a relative location in the X sub-BWPs. In other words, a reference start point of the frequency domain resource indicated by the FDRA indicator field is a start location of the X sub-BWPs.

In this manner, there may be at least one time domain unit between a time domain resource carrying the DCI and a time domain resource of the data channel scheduled by using the DCI.

Because the DCI is carried on the control channel (for example, the PDCCH), the time domain resource carrying the DCI may also be described as a time domain resource of the control channel. A time domain resource carrying DCI below may also be replaced with a similar description, and details are not described again.

In the foregoing manner, cross-slot scheduling is performed for the control channel and the data channel scheduled by using the control channel, so that the terminal device can determine the active sub-BWP before receiving the data channel, and can buffer only the data transmitted on an active sub-BWP. This helps reduce the specification of the buffer of the terminal device, and reduce the costs of the terminal device. In addition, the data packet loss rate may be reduced, and the transmission performance may be improved.

It should be noted that the second information is optional. For example, if X=1, that is, only one sub-BWP is determined in the BWP, the sub-BWP is an active sub-BWP by default, and does not need to be activated by using the second information.

The foregoing describes a process of indicating the Y active sub-BWPs by using the DCI. There may be the following two solutions for effective time of the Y sub-BWPs.

Solution 1: A time domain unit corresponding to the Y sub-BWPs starting to take effect is a start time unit of the data channel scheduled by using the DCI. In Solution 1, the active sub-BWP indicated by the DCI and the data channel scheduled by using the DCI may take effect simultaneously.

In an example description, the Y active sub-BWPs are bound to the data channel scheduled by using the DCI. In other words, the Y sub-BWPs and the data channel scheduled by using the DCI may take effect simultaneously. That the Y sub-BWPs become invalid after transmission of the data channel scheduled by using the DCI is completed may also be understood as that the active sub-BWP indicated by the DCI is an active sub-BWP used for transmission of the scheduled data channel.

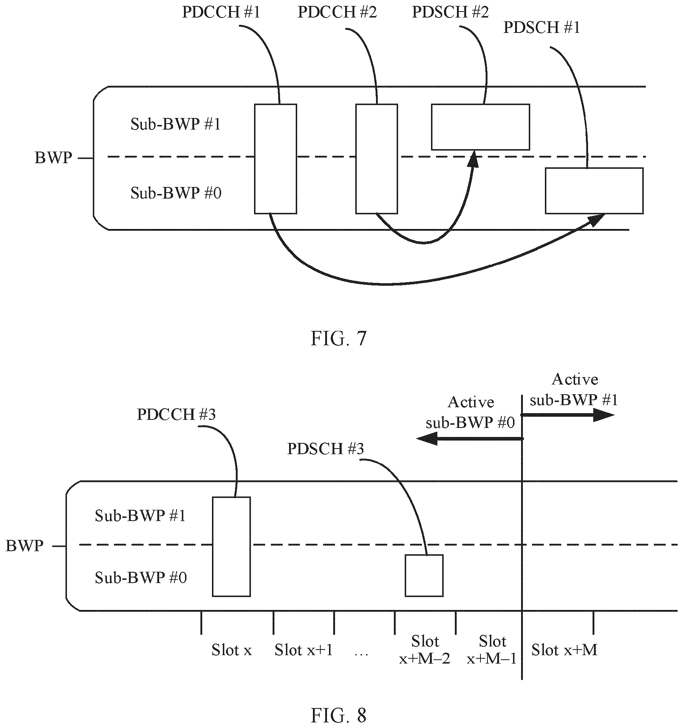

For example, as shown in FIG. 6 or FIG. 7, a PDCCH #1 is used for scheduling a PDSCH #1, and the PDCCH #1 indicates that an active sub-BWP is a sub-BWP #0. The sub-BWP #0 is used for transmission of a PDSCH #1. A PDCCH #2 is used for scheduling a PDSCH #2, and the PDCCH #2 indicates that an active sub-BWP is the sub-BWP #1. The sub-BWP #1 is used for transmission of the PDSCH #2.

In another example description, the Y active sub-BWPs are not bound to the data channel scheduled by using the DCI, and only take effect simultaneously with the data channel scheduled by using the DCI. After the transmission of the data channel scheduled by using the DCI is completed, the Y sub-BWPs may be further used for transmission of another data channel. To be specific, before there is no new indication for activating a sub-BWP, the terminal device and the network device still use the Y active sub-BWPs for transmission of the data channel.

Solution 2: A time domain unit corresponding to the Y sub-BWPs starting to take effect (or are active) is a time domain unit that is after the time domain resource carrying the DCI and that is separated by M time domain units from the time domain resource carrying the DCI. In other words, the DCI may indicate a sub-BWP activated after the M time domain units. M may be configured by the network device, may be preconfigured, may be preset, or may be specified in a protocol. Optionally, before the Y sub-BWPs start to take effect (or are active), the terminal device and the network device still use an originally active sub-BWP for transmission of the data channel.

In Solution 2, the data channel scheduled by using the DCI may be before the Y sub-BWPs take effect, or may be after the Y sub-BWPs take effect.

If the data channel scheduled by using the DCI is before the active sub-BWP indicated by the DCI takes effect, transmission of the data channel scheduled by using the DCI is performed by using the originally active sub-BWP. If the data channel scheduled by using the DCI is after the active sub-BWP indicated by the DCI takes effect, transmission of the data channel scheduled by using the DCI is performed by using the active sub-BWP indicated by the DCI.

For example, as shown in FIG. 8, it is assumed that before a PDCCH #3, an active sub-BWP is a sub-BWP #0, an active sub-BWP indicated by the PDCCH #3 is a sub-BWP #1, and it indicates that the sub-BWP #1 takes effect in M slots after the PDCCH #3. For example, a time domain resource of the PDCCH #3 is a slot x. In this case, transmission of a data channel is performed between a slot x and a slot x+M by using the sub-BWP #0.

After the slot x+M, transmission of the data channel is performed by using the sub-BWP #1. Assuming that a time domain resource of a PDSCH #1 scheduled by a PDCCH #1 is a slot x+M-2, the PDSCH #1 uses the sub-BWP #0 for transmission.

The foregoing describes a process of activating the Y sub-BWPs. Because the active sub-BWP indicated by the first signaling or the DCI may be different from a currently active sub-BWP, there may be a process of switching the active sub-BWP.

In the process of switching the active sub-BWP, if the active BWP does not need to be switched, and the active sub-BWP in the BWP needs to be switched, that is, the active BWP does not change, and the active sub-BWP in the BWP changes, in this case, between the time domain resource carrying the DCI and the time domain resource of the first data channel, the terminal device maintains communication with the network device. In other words, on a time domain resource between the time domain resource carrying the DCI and the time domain resource of the first data channel, the terminal device and the network device continue to perform transmission of the control channel, the data channel, the reference signal, and the like.

If the active BWP needs to be switched, regardless of whether the active sub-BWP in the BWP needs to be switched, the communication between the terminal device and the network device is interrupted between the time domain resource carrying the DCI and the time domain resource of the first data channel. In other words, on the time domain resource between the time domain resource carrying the DCI and the time domain resource of the first data channel, the transmission of the control channel, the data channel, the reference signal, and the like between the terminal device and the network device is stopped. Optionally, interruption duration is not less than an existing BWP switching delay.

It should be noted that, because the sub-BWP belongs to the BWP, and the BWP also has a concept for activation, when an active sub-BWP is described in this application, it is assumed that a BWP to which the sub-BWP belongs is an active BWP. In other words, if a BWP is not an active BWP, in this case, none of sub-BWPs of the BWP can be activated.

In this embodiment of this application, the BWP is divided into some resources (namely, the X sub-BWPs) for transmission of data, and some resources (namely, the Y sub-BWPs) in the resources are activated for transmission of the data during transmission. Because a frequency domain resource for transmission of the data is preconfigured, that is, known by the terminal device, the terminal device may buffer only data transmitted on an active sub-BWP. This helps reduce a specification of a buffer (post-FFT buffer) of the terminal device, and reduce costs of the terminal device. In addition, this resolves a problem that the terminal device does not know a specific frequency domain resource in the BWP for which transmitted data is to be buffered because the terminal device does not know a frequency domain resource of the data channel before completing DCI parsing, so that the data packet loss rate is reduced, and the transmission performance is improved.

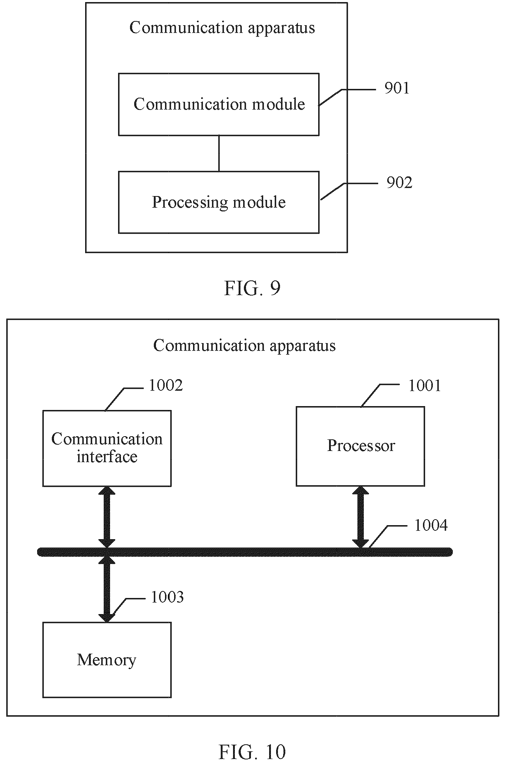

Based on a same concept as the method embodiments, an embodiment of this application provides a communication apparatus. A structure of the communication apparatus may be shown in FIG. 9, and the communication apparatus includes a communication module 901 and a processing module 902.

In an implementation, the communication apparatus may be specifically configured to implement the method performed by the terminal device in the embodiment in FIG. 3. The apparatus may be the terminal device, may be a chip or a chip set in the terminal device, or a part of the chip that is configured to perform a related method function. The processing module 902 is configured to determine X sub-BWPs in a BWP of the terminal device, where X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, and the X sub-BWPs are used for transmission of a data channel. The communication module 901 is configured to perform transmission of a first data channel with a network device on Y sub-BWPs in the X sub-BWPs, where Y is an integer greater than 0 and not greater than X.

For example, a total bandwidth of the Y sub-BWPs is less than or equal to the maximum bandwidth supported by the terminal device for baseband processing.

Optionally, the communication module 901 is further configured to receive first information from the network device, where the first information is used for configuring the X sub-BWPs in the BWP.

For example, the first information is used for configuring a value of X.

Alternatively, the first information is used for configuring the bandwidth of the sub-BWP.

Alternatively, the first information is used for configuring a start location and a bandwidth of each of the X sub-BWPs.

Alternatively, the first information is used for configuring an end location and a bandwidth of each of the X sub-BWPs.

Alternatively, the first information is used for configuring a start location and an end location of each of the X sub-BWPs.

Optionally, the communication module 901 is further configured to receive second information from the network device, where the second information is used for activating the Y sub-BWPs.

Optionally, when receiving the second information from the network device, the communication module 901 is specifically configured to receive first signaling from the network device, where the first signaling includes one or more of the following signaling: a system information block, radio resource control, and a multimedia access control control module, and the first signaling carries the second information.

Optionally, when receiving the second information from the network device, the communication module 901 is specifically configured to receive downlink control information from the network device, where the downlink control information is used for scheduling a data channel, and the downlink control information carries the second information.

For example, at least one time domain module is separated between a time domain resource carrying the downlink control information and a time domain resource of the data channel scheduled by using the downlink control information.

For example, a time domain module corresponding to the Y sub-BWPs starting to take effect is a start time module of the time domain resource of the data channel scheduled by using the downlink control information.

Alternatively, a time domain module corresponding to the Y sub-BWPs starting to take effect is a time domain module that is after the time domain resource carrying the downlink control information and that is separated by M time domain modules from the time domain resource carrying the downlink control information.

For example, the second information is carried in at least one reserved bit in the downlink control information.

Alternatively, the second information is carried in at least one bit in a downlink assignment indicator field in the downlink control information.

Alternatively, the second information is carried in a first indicator field in the downlink control information, where the first indicator field indicates an active sub-BWP in the BWP.

Alternatively, the second information is carried in a second indicator field in the downlink control information, where the second indicator field indicates an active BWP.

Alternatively, the second information is carried in at least one bit in a frequency domain resource allocation indicator field in the downlink control information.

For example, the downlink control information includes the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

Optionally, the communication module 901 is further configured to communicate with the network device on a time domain resource between the time domain resource carrying the downlink control information and the time domain resource of the data channel scheduled by using the downlink control information.

In an implementation, the communication apparatus may be specifically configured to implement the method performed by the network device in the embodiment in FIG. 3. The apparatus may be the network device, may be a chip or a chip set in the network device, or a part of the chip that is configured to perform a related method function. The processing module 902 is configured to determine X sub-BWPs in a BWP of a terminal device, where X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, and the X sub-BWPs are used for transmission of a data channel. The communication module 901 is configured to perform transmission of a first data channel with the terminal device on Y sub-BWPs in the X sub-BWPs, where Y is an integer greater than 0 and not greater than X.

For example, a total bandwidth of the Y sub-BWPs is less than or equal to the maximum bandwidth supported by the terminal device for baseband processing.

Optionally, the communication module 901 is further configured to send first information to the terminal device, where the first information is used for configuring the X sub-BWPs in the BWP.

For example, the first information is used for configuring a value of X.

Alternatively, the first information is used for configuring the bandwidth of the sub-BWP.

Alternatively, the first information is used for configuring a start location and a bandwidth of each of the X sub-BWPs.

Alternatively, the first information is used for configuring an end location and a bandwidth of each of the X sub-BWPs.

Alternatively, the first information is used for configuring a start location and an end location of each of the X sub-BWPs.

Optionally, the communication module 901 is further configured to send second information to the terminal device, where the second information is used for activating the Y sub-BWPs.

Optionally, when sending the second information to the terminal device, the communication module 901 is specifically configured to send first signaling to the terminal device, where the first signaling includes one or more of the following signaling: a system information block, radio resource control, and a multimedia access control control element, and the first signaling carries the second information.

Optionally, when sending the second information to the terminal device, the communication module 901 is specifically configured to send downlink control information to the terminal device, where the downlink control information is used for scheduling a data channel, and the downlink control information carries the second information.

For example, at least one time domain unit is separated between a time domain resource carrying the downlink control information and a time domain resource of the data channel scheduled by using the downlink control information.

For example, a time domain unit corresponding to the Y sub-BWPs starting to take effect is a start time unit of the time domain resource of the data channel scheduled by using the downlink control information.

Alternatively, a time domain unit corresponding to the Y sub-BWPs starting to take effect is a time domain unit that is after the time domain resource carrying the downlink control information and that is separated by M time domain units from the time domain resource carrying the downlink control information.

For example, the second information is carried in at least one reserved bit in the downlink control information.

Alternatively, the second information is carried in at least one bit in a downlink assignment indicator field in the downlink control information.

Alternatively, the second information is carried in a first indicator field in the downlink control information, where the first indicator field indicates an active sub-BWP in the BWP.

Alternatively, the second information is carried in a second indicator field in the downlink control information, where the second indicator field indicates an active BWP.

Alternatively, the second information is carried in at least one bit in a frequency domain resource allocation indicator field in the downlink control information.

For example, the downlink control information includes the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

Optionally, the communication unit is further configured to communicate with the terminal device on a time domain resource between the time domain resource carrying the downlink control information and the time domain resource of the data channel scheduled by using the downlink control information.

Division into the modules in embodiments of this application is an example, is merely division into logical functions, and may be other division during actual implementation. In addition, function modules in embodiments of this application may be integrated into one processor, or each of the modules may exist alone physically, or two or more modules may be integrated into one module. The integrated module may be implemented in a form of hardware, or may be implemented in a form of a software function module. It may be understood that for functions or implementations of the modules in embodiments of this application, further refer to related descriptions in the method embodiments.

In a possible manner, the communication apparatus may be shown in FIG. 10. The apparatus may be a communication device or a chip in the communication device. The communication device may be a terminal device, or may be a network device. The apparatus includes a processor 1001 and a communication interface 1002, and may further include a memory 1003. The processing module 902 may be the processor 1001. The communication module 901 may be the communication interface 1002.

The processor 1001 may be a CPU, a digital processing unit, or the like. The communication interface 1002 may be a transceiver, an interface circuit such as a transceiver circuit, a transceiver chip, or the like. The apparatus further includes the memory 1003, configured to store a program executed by the processor 1001. The memory 1003 may be a non-volatile memory such as a hard disk drive (hard disk drive, HDD) or a solid-state drive (solid-state drive, SSD), or may be a volatile memory (volatile memory), for example, a random access memory (random access memory, RAM). The memory 1003 is any other medium that can carry or store expected program code in a form of an instruction or a data structure and that can be accessed by a computer, but is not limited thereto.

The processor 1001 is configured to execute the program code stored in the memory 1003, and is specifically configured to perform an action of the processing module 902. Details are not described herein in this application. The communication interface 1002 is specifically configured to perform an action of the communication module 901. Details are not described herein again in this application.

A specific connection medium between the communication interface 1002, the processor 1001, and the memory 1003 is not limited in this embodiment of this application. In this embodiment of this application, the memory 1003, the processor 1001, and the communication interface 1002 are connected through a bus 1004 in FIG. 10. The bus is represented by a thick line in FIG. 10. A connection manner between other components is merely an example for description, and is not limited thereto. Buses may be classified into an address bus, a data bus, a control bus, and the like. For ease of representation, only one thick line is used for representing the bus in FIG. 10, but this does not mean that there is only one bus or only one type of bus.

An embodiment of this application further provides a computer-readable storage medium, configured to store computer software instructions that need to be performed by the foregoing processor. The computer software instructions include a program that needs to be performed by the foregoing processor.

An embodiment of this application further provides a communication system. The communication system includes a communication apparatus configured to implement a function of the terminal device in the embodiment in FIG. 3 and a communication apparatus configured to implement a function of the network device in the embodiment in FIG. 3.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

**Claims**

1. A communication method, wherein the method comprises:

   determining X sub-BWPs in a bandwidth part BWP of a terminal device, wherein X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, and the X sub-BWPs are used for transmission of a data channel; and
   performing transmission of a first data channel with a network device on Y sub-BWPs in the X sub-BWPs, wherein Y is an integer greater than 0 and not greater than X.

2. The method according to claim 1, wherein a total bandwidth of the Y sub-BWPs is less than or equal to the maximum bandwidth supported by the terminal device for baseband processing.

3. The method according to claim 1 or 2, wherein the method further comprises:
   receiving first information from the network device, wherein the first information is used for configuring the X sub-BWPs in the BWP.

4. The method according to claim 3, wherein

   the first information is used for configuring a value of X;
   the first information is used for configuring the bandwidth of the sub-BWP;
   the first information is used for configuring a start location and a bandwidth of each of the X sub-BWPs;
   the first information is used for configuring an end location and a bandwidth of each of the X sub-BWPs; or
   the first information is used for configuring a start location and an end location of each of the X sub-BWPs.

5. The method according to any one of claims 1 to 4, wherein the method further comprises:
   receiving second information from the network device, wherein the second information is used for activating the Y sub-BWPs.

6. The method according to claim 5, wherein the receiving second information from the network device comprises:
   receiving first signaling from the network device, wherein the first signaling comprises one or more of the following signaling: a system information block, radio resource control, and a multimedia access control control element, and the first signaling carries the second information.

7. The method according to claim 5, wherein the receiving second information from the network device comprises:
   receiving downlink control information from the network device, wherein the downlink control information is used for scheduling a data channel, and the downlink control information carries the second information.

8. The method according to claim 7, wherein at least one time domain unit is separated between a time domain resource carrying the downlink control information and a time domain resource of the data channel scheduled by using the downlink control information.

9. The method according to claim 7 or 8, wherein a time domain unit corresponding to the Y sub-BWPs starting to take effect is a start time unit of the time domain resource of the data channel scheduled by using the downlink control information; or
   a time domain unit corresponding to the Y sub-BWPs starting to take effect is a time domain unit that is after the time domain resource carrying the downlink control information and that is separated by M time domain units from the time domain resource carrying the downlink control information.

10. The method according to any one of claims 7 to 9, wherein the second information is carried in at least one reserved bit in the downlink control information;

    the second information is carried in at least one bit in a downlink assignment indicator field in the downlink control information;
    the second information is carried in a first indicator field in the downlink control information, wherein the first indicator field indicates an active sub-BWP in the BWP;
    the second information is carried in a second indicator field in the downlink control information, wherein the second indicator field indicates an active BWP; or
    the second information is carried in at least one bit in a frequency domain resource allocation indicator field in the downlink control information.

11. The method according to any one of claims 7 to 10, wherein the downlink control information comprises the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

12. The method according to any one of claims 7 to 11, wherein the method further comprises:
communicating with the network device on a time domain resource between the time domain resource carrying the downlink control information and the time domain resource of the data channel scheduled by using the downlink control information.

13. A communication method, wherein the method comprises:

determining X sub-BWPs in a bandwidth part BWP of a terminal device, wherein X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, and the X sub-BWPs are used for transmission of a data channel; and
performing transmission of a first data channel with the terminal device on Y sub-BWPs in the X sub-BWPs, wherein Y is an integer greater than 0 and not greater than X.

14. The method according to claim 13, wherein a total bandwidth of the Y sub-BWPs is less than or equal to the maximum bandwidth supported by the terminal device for baseband processing.

15. The method according to claim 13 or 14, wherein the method further comprises:
sending first information, wherein the first information is used for configuring the X sub-BWPs in the BWP.

16. The method according to claim 15, wherein

the first information is used for configuring a value of X;
the first information is used for configuring the bandwidth of the sub-BWP;
the first information is used for configuring a start location and a bandwidth of each of the X sub-BWPs;
the first information is used for configuring an end location and a bandwidth of each of the X sub-BWPs; or
the first information is used for configuring a start location and an end location of each of the X sub-BWPs.

17. The method according to any one of claims 13 to 16, wherein the method further comprises:
sending second information, wherein the second information is used for activating the Y sub-BWPs.

18. The method according to claim 17, wherein the sending second information comprises:
sending first signaling, wherein the first signaling comprises one or more of the following signaling: a system information block, radio resource control, and a multimedia access control control element, and the first signaling carries the second information.

19. The method according to claim 17, wherein the sending second information comprises:
sending downlink control information, wherein the downlink control information is used for scheduling a data channel, and the downlink control information carries the second information.

20. The method according to claim 19, wherein at least one time domain unit is separated between a time domain resource carrying the downlink control information and a time domain resource of the data channel scheduled by using the downlink control information.

21. The method according to claim 19 or 20, wherein a time domain unit corresponding to the Y sub-BWPs starting to take effect is a start time unit of the time domain resource of the data channel scheduled by using the downlink control information; or
a time domain unit corresponding to the Y sub-BWPs starting to take effect is a time domain unit that is after the time domain resource carrying the downlink control information and that is separated by M time domain units from the time domain resource carrying the downlink control information.

22. The method according to any one of claims 19 to 21, wherein the second information is carried in at least one reserved bit in the downlink control information;

the second information is carried in at least one bit in a downlink assignment indicator field in the downlink control information;
the second information is carried in a first indicator field in the downlink control information, wherein the first indicator field indicates an active sub-BWP in the BWP;
the second information is carried in a second indicator field in the downlink control information, wherein the second indicator field indicates an active BWP; or
the second information is carried in at least one bit in a frequency domain resource allocation indicator field in the downlink control information.

23. The method according to any one of claims 19 to 22, wherein the downlink control information comprises the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

24. The method according to any one of claims 19 to 23, wherein the method further comprises:
communicating with the terminal device on a time domain resource between the time domain resource carrying the downlink control information and the time domain resource of the data channel scheduled by using the downlink control information.

25. A communication apparatus, wherein the apparatus comprises:

a processing module, configured to determine X sub-BWPs in a bandwidth part BWP of a terminal device, wherein X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, and the X sub-BWPs are used for transmission of a data channel; and
a communication module, configured to perform transmission of a first data channel with a network device on Y sub-BWPs in the X sub-BWPs, wherein Y is an integer greater than 0 and not greater than X.

26. The apparatus according to claim 25, wherein a total bandwidth of the Y sub-BWPs is less than or equal to the maximum bandwidth supported by the terminal device for baseband processing.

27. The apparatus according to claim 25 or 26, wherein the communication module is further configured to:
receive first information from the network device, wherein the first information is used for configuring the X sub-BWPs in the BWP.

28. The apparatus according to claim 27, wherein

the first information is used for configuring a value of X;

the first information is used for configuring the bandwidth of the sub-BWP;
the first information is used for configuring a start location and a bandwidth of each of the X sub-BWPs;
the first information is used for configuring an end location and a bandwidth of each of the X sub-BWPs; or
the first information is used for configuring a start location and an end location of each of the X sub-BWPs.

29. The apparatus according to any one of claims 25 to 28, wherein the communication module is further configured to:
receive second information from the network device, wherein the second information is used for activating the Y sub-BWPs.

30. The apparatus according to claim 29, wherein when receiving the second information from the network device, the communication module is specifically configured to:
receive first signaling from the network device, wherein the first signaling comprises one or more of the following signaling: a system information block, radio resource control, and a multimedia access control control module, and the first signaling carries the second information.

31. The apparatus according to claim 29, wherein when receiving the second information from the network device, the communication module is specifically configured to:
receive downlink control information from the network device, wherein the downlink control information is used for scheduling a data channel, and the downlink control information carries the second information.

32. The apparatus according to claim 31, wherein at least one time domain module is separated between a time domain resource carrying the downlink control information and a time domain resource of the data channel scheduled by using the downlink control information.

33. The apparatus according to claim 31 or 32, wherein a time domain module corresponding to the Y sub-BWPs starting to take effect is a start time module of the time domain resource of the data channel scheduled by using the downlink control information; or
a time domain module corresponding to the Y sub-BWPs starting to take effect is a time domain module that is after the time domain resource carrying the downlink control information and that is separated by M time domain modules from the time domain resource carrying the downlink control information.

**34.** The apparatus according to any one of claims 31 to 33, wherein the second information is carried in at least one reserved bit in the downlink control information;

the second information is carried in at least one bit in a downlink assignment indicator field in the downlink control information;
the second information is carried in a first indicator field in the downlink control information, wherein the first indicator field indicates an active sub-BWP in the BWP;
the second information is carried in a second indicator field in the downlink control information, wherein the second indicator field indicates an active BWP; or
the second information is carried in at least one bit in a frequency domain resource allocation indicator field in the downlink control information.

**35.** The apparatus according to any one of claims 31 to 34, wherein the downlink control information comprises the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

**36.** The apparatus according to any one of claims 31 to 35, wherein the communication module is further configured to:
communicate with the network device on a time domain resource between the time domain resource carrying the downlink control information and the time domain resource of the data channel scheduled by using the downlink control information.

**37.** A communication apparatus, wherein the apparatus comprises:

a processing module, configured to determine X sub-BWPs in a bandwidth part BWP of a terminal device, wherein X is an integer greater than or equal to 1, a bandwidth of the sub-BWP is less than or equal to a maximum bandwidth supported by the terminal device for baseband processing, the BWP is used for transmission of at least one of the following: a control channel, a data channel, or a reference signal, and the X sub-BWPs are used for transmission of a data channel; and
a communication module, configured to perform transmission of a first data channel with the terminal device on Y sub-BWPs in the X sub-BWPs, wherein Y is an integer greater than 0 and not greater than X.

**38.** The apparatus according to claim 37, wherein a total bandwidth of the Y sub-BWPs is less than or equal to the maximum bandwidth supported by the terminal device for baseband processing.

**39.** The apparatus according to claim 37 or 38, wherein the communication module is further configured to: send first information, wherein the first information is used for configuring the X sub-BWPs in the BWP.

**40.** The apparatus according to claim 39, wherein

the first information is used for configuring a value of X;
the first information is used for configuring the bandwidth of the sub-BWP;
the first information is used for configuring a start location and a bandwidth of each of the X sub-BWPs;
the first information is used for configuring an end location and a bandwidth of each of the X sub-BWPs; or
the first information is used for configuring a start location and an end location of each of the X sub-BWPs.

**41.** The apparatus according to any one of claims 37 to 40, wherein the communication module is further configured to:
send second information, wherein the second information is used for activating the Y sub-BWPs.

**42.** The apparatus according to claim 41, wherein when sending the second information, the communication module is specifically configured to:
send first signaling, wherein the first signaling comprises one or more of the following signaling: a system information block, radio resource control, and a multimedia access control control element, and the first signaling carries the second information.

**43.** The apparatus according to claim 41, wherein when sending the second information, the communication module is specifically configured to:
send downlink control information, wherein the downlink control information is used for scheduling a data channel, and the downlink control information carries the second information.

**44.** The apparatus according to claim 43, wherein at least one time domain unit is separated between a time domain resource carrying the downlink control information and a time domain resource of the data channel scheduled by using the downlink control information.

45. The apparatus according to claim 43 or 44, wherein a time domain unit corresponding to the Y sub-BWPs starting to take effect is a start time unit of the time domain resource of the data channel scheduled by using the downlink control information; or
a time domain unit corresponding to the Y sub-BWPs starting to take effect is a time domain unit that is after the time domain resource carrying the downlink control information and that is separated by M time domain units from the time domain resource carrying the downlink control information.

46. The apparatus according to any one of claims 43 to 45, wherein the second information is carried in at least one reserved bit in the downlink control information;

the second information is carried in at least one bit in a downlink assignment indicator field in the downlink control information;
the second information is carried in a first indicator field in the downlink control information, wherein the first indicator field indicates an active sub-BWP in the BWP;
the second information is carried in a second indicator field in the downlink control information, wherein the second indicator field indicates an active BWP; or
the second information is carried in at least one bit in a frequency domain resource allocation indicator field in the downlink control information.

47. The apparatus according to any one of claims 43 to 46, wherein the downlink control information comprises the frequency domain resource allocation indicator field, the frequency domain resource allocation indicator field indicates a location of a frequency domain resource of the data channel scheduled by using the downlink control information, and the location of the frequency domain resource is a relative location in the BWP, or the location of the frequency domain resource is a relative location in the Y sub-BWPs.

48. The apparatus according to any one of claims 43 to 47, wherein the communication module is further configured to:
communicate with the terminal device on a time domain resource between the time domain resource carrying the downlink control information and the time domain resource of the data channel scheduled by using the downlink control information.

49. A computer-readable storage medium, wherein the computer-readable storage medium stores computer-readable instructions, and when the computer-readable instructions are run on a communication apparatus, the method according to any one of claims 1 to 12 is performed, or the method according to any one of claims 13 to 24 is performed.

FIG. 1

FIG. 2

FIG. 3

FIG. 4

FIG. 5

FIG. 6

PDCCH #1    PDCCH #2    PDSCH #2
                                    PDSCH #1

BWP

Sub-BWP #1

Sub-BWP #0

FIG. 7

Active
sub-BWP #1

Active
sub-BWP #0

PDCCH #3

PDSCH #3

BWP

Sub-BWP #1

Sub-BWP #0

Slot x    Slot x+1    ...    Slot
x+M–2    Slot
x+M–1    Slot x+M

FIG. 8

EP 4 615 090 A1

Communication apparatus

Communication module — 901

Processing module — 902

FIG. 9

Communication apparatus

Communication
interface — 1002

Processor — 1001

— 1004

— 1003

Memory

FIG. 10

25

## INTERNATIONAL SEARCH REPORT

| | International application No. |
|---|---|
| | **PCT/CN2023/127589** |

**A. CLASSIFICATION OF SUBJECT MATTER**

H04W 72/ 04(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI, CNTXT, CJFD, ENTXT, WPABS, VEN; 带宽部分, 子带宽, 窄带, 子资源块, 多个, 传输, 控制, 数据, 参考信号; BWP, sub-BWP, narrow band, multiple, transmission, control channel, data channel, PUSCH, PDSCH

**C. DOCUMENTS CONSIDERED TO BE RELEVANT**

| Category* | Citation of document, with indication, where appropriate, of the relevant passages | Relevant to claim No. |
|---|---|---|
| Y | CN 115175143 A (HUAWEI TECHNOLOGIES CO., LTD.) 11 October 2022 (2022-10-11) description, paragraphs 116-280, and claims 1-43 | 1-7, 13-19, 25-31, 37-43, 49 |
| Y | CN 112449424 A (HUAWEI TECHNOLOGIES CO., LTD.) 05 March 2021 (2021-03-05) description, paragraphs 138-222 | 1-7, 13-19, 25-31, 37-43, 49 |
| A | CN 115023993 A (GUANGDONG OPPO MOBILE COMMUNICATIONS CO., LTD.) 06 September 2022 (2022-09-06) entire document | 1-49 |
| A | US 2020367050 A1 (GUANGDONG OPPO MOBILE TELECOMMUNICATIONS CORP. CO., LTD.) 19 November 2020 (2020-11-19) entire document | 1-49 |
| A | WO 2022127732 A1 (SHARP K.K. et al.) 23 June 2022 (2022-06-23) entire document | 1-49 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 December 2023** | **04 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/127589**

| Patent document cited in search report | | | Publication date (day/month/year) | Patent family member(s) | | | Publication date (day/month/year) |
|---|---|---|---|---|---|---|---|
| CN | 115175143 | A | 11 October 2022 | None | | | |
| CN | 112449424 | A | 05 March 2021 | None | | | |
| CN | 115023993 | A | 06 September 2022 | US | 2022369386 | A1 | 17 November 2022 |
| | | | | EP | 4087347 | A1 | 09 November 2022 |
| | | | | EP | 4087347 | A4 | 10 May 2023 |
| | | | | WO | 2021243920 | A1 | 09 December 2021 |
| US | 2020367050 | A1 | 19 November 2020 | JP | 2021510021 | A | 08 April 2021 |
| | | | | JP | 7182628 | B2 | 02 December 2022 |
| | | | | KR | 20200086294 | A | 16 July 2020 |
| | | | | KR | 102488273 | B1 | 13 January 2023 |
| | | | | WO | 2019095212 | A1 | 23 May 2019 |
| | | | | AU | 2017439705 | A1 | 04 June 2020 |
| | | | | EP | 3703446 | A1 | 02 September 2020 |
| | | | | EP | 3703446 | A4 | 21 October 2020 |
| | | | | EP | 3703446 | B1 | 15 June 2022 |
| WO | 2022127732 | A1 | 23 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211379466